# EUROPÄISCHE PATENTANMELDUNG

(11) **EP 4 119 424 A1**
(43) Veröffentlichungstag der Anmeldung: **18.01.2023**
(21) Anmeldenummer: 21185915.2
(22) Anmeldetag: 15.07.2021
(51) Int. Cl.: B62D 27/02

(54) **VERBINDUNG VON KAROSSERIEELEMENTEN IN KRAFTFAHRZEUGEN**

(71) Anmelder: Sika Technology AG, 6340 Baar (CH)
(72) Erfinder: Souvay, Denis, 67400 Illkirch (FR)
(74) Vertreter: Sika Patent Attorneys

(57) **Zusammenfassung**

Ein System verbundener Karosserieelemente für ein Kraftfahrzeug, das System umfassend: ein erstes Karosserieelement; ein zweites Karosserieelement, wobei die Karosserieelemente derart zueinander angeordnet sind, dass zwischen den Karosserieelementen ein Spalt ist; einen Klebstoff, welcher zumindest teilweise im Spalt angeordnet ist und das erste Karosserieelement mit dem zweiten Karosserieelement verklebt. Dabei ist zumindest ein Aufsatzelement an zumindest einem der Karosserieelemente angeordnet, sodass das Aufsatzelement den Spalt in einen Kanal und eine neben dem Kanal liegende Schulter gliedert, wobei der Klebstoff zumindest teilweise im Kanal und zumindest teilweise auf der Schulter angeordnet ist, und wobei ein direkt an die Schulter anschliessender Anschlussbereich frei ist von Klebstoff, und wobei das Aufsatzelement den Spalt zwischen den Karosserieelementen nicht vollständig abdichtet.

## Beschreibung

Die Erfindung betrifft ein System verbundener Karosserieelemente für Kraftfahrzeuge, sowie ein Verfahren zur Verbindung von Karosserieelementen in Kraftfahrzeugen.

Karosserieelemente, wie beispielsweise Extrusionsprofile, Gussteile oder Bleche, werden zur Verbindung häufig miteinander verklebt. Dabei kommen einerseits Klebstoffe zum Einsatz, welche als Klebstoffraupen auf ein erstes Element aufgebracht werden, wobei ein zweites zu verklebendes Element danach auf diese Klebstoffraupe aufgebracht wird zur Verklebung der beiden Karosserieelemente. Solche bekannten Verfahren haben jedoch den Nachteil, dass die Handhabung der zu verklebenden Karosserieelemente sowie die Applikation des Klebstoffes einerseits aufwendig sind und andererseits gewisse Restriktionen aufweisen. So ist es beispielsweise schwierig, mit dieser Methode ineinander verschachtelte Elemente miteinander zu verkleben. Dies ist deshalb so, weil die auf das erste Element aufgetragene Klebstoffraupe bei einer Anbringung des zweiten Elementes abgestreift werden kann, und somit nicht mehr an einer gewünschten Position vorliegt, um die Elemente miteinander zu verkleben.

Eine weitere Methode zur Verklebung von Elementen im Karosseriebau von Kraftfahrzeugen sieht vor, dass - insbesondere für ineinander verschachtelte Karosserieelemente - ein flüssiger Klebstoff in eine geschlossene Kammer injiziert wird, um dadurch die zu verklebenden Elemente miteinander verklebt. Ein Nachteil dieser Methode ist es, dass fluiddicht geschlossene Hohlräume geschaffen werden müssen, welche einen Raum für den flüssigen Klebstoff vorgeben. Dies kann beispielsweise mit Dichtungen erreicht werden und erfordert Elemente mit sehr kleinen Fertigungstoleranzen. Das hat zur Folge, dass solche Systeme aufwendig und kostspielig in der Herstellung sind.

Um diese Nachteile zu überwinden, wurde in WO2018/234477A1 ein System vorgeschlagen, bei dem keine fluiddichten Hohlräume vorgesehen werden müssen für die Verklebung zweier Komponenten. Mittels Kanälen, welche in den Komponenten integriert vorgesehen sind, wird ein offener Zwischenraum mit Klebstoff verfüllt. Der Klebstoff ist dabei so ausgebildet, dass er auf Schultern neben den Kanälen verfestigt, sodass eine unkontrollierte Ausbreitung des Klebstoffes verhindert werden kann. Allerdings hat dieses System bzw. dieses Verfahren den Nachteil, dass die zu verklebenden Komponenten aufwändig und daher teuer in der Herstellung sind. Insbesondere das Ausbilden der Kanäle in den Komponenten bedingt einen hohen Aufwand bei deren Herstellung.

Der Erfindung liegt daher die Aufgabe zugrunde, ein verbessertes System verbundener Karosserieelemente für Kraftfahrzeuge bzw. ein verbessertes Verfahren zur Verbindung von Karosserieelementen in Kraftfahrzeugen zur Verfügung zu stellen, welches erlaubt, Karosserieelemente in Kraftfahrzeugen kostengünstiger miteinander zu verbinden.

Diese Aufgabe wird zunächst gelöst durch ein System verbundener Karosserieelemente für ein Kraftfahrzeug, das System umfassend: ein erstes Karosserieelement; ein zweites Karosserieelement, wobei die Karosserieelemente derart zueinander angeordnet sind, dass zwischen den Karosserieelementen ein Spalt ist; einen Klebstoff, welcher zumindest teilweise im Spalt angeordnet ist und das erste Karosserieelement mit dem zweiten Karosserieelement verklebt. Dabei ist zumindest ein Aufsatzelement an zumindest einem der Karosserieelemente angeordnet, sodass das Aufsatzelement den Spalt in einen Kanal und eine neben dem Kanal liegende Schulter gliedert, wobei der Klebstoff zumindest teilweise im Kanal und zumindest teilweise auf der Schulter angeordnet ist, und wobei ein direkt an die Schulter anschliessender Anschlussbereich frei ist von Klebstoff, und wobei das Aufsatzelement den Spalt zwischen den Karosserieelementen nicht vollständig abdichtet.

Die hier vorgeschlagene Lösung hat zunächst den Vorteil, dass durch das Verwenden von Aufsatzelementen zur Bildung der Kanäle und Schultern günstige Standard-Karosserieelemente verwendet werden können, welche keine separaten Bearbeitungsschritte zur Bildung der Kanäle erfordern.

Gegenüber Lösungen mit abgedichteten Kleberäumen hat die hier vorgeschlagene Lösung den Vorteil, dass zur Verbindung von Karosserieelementen in Kraftfahrzeugen kein fluiddicht abgeschlossener Raum für den Klebstoff vorgesehen werden muss, sondern dass ein kostengünstigeres und einfacher zu handhabendes offenes System ohne fluiddicht abgeschlossene Zwischenräume verwendet werden kann. Somit können Karosserieelemente verwendet werden, welche keine Dichtungen aufweisen, was einem wesentlichen Kostenvorteil entspricht. Weiterhin erlaubt es die vorliegende Erfindung, auch Teile mit grösseren Fertigungstoleranzen miteinander zu verkleben bzw. zu verbinden, weil keine fluiddicht abgeschlossenen Räume für den Klebstoff vorgesehen werden müssen. Auch dies entspricht einem wesentlichen Kostenvorteil gegenüber den bekannten Systemen, weil dadurch die verschiedenen Elemente des Systems mit grösseren Fertigungstoleranzen hergestellt werden können, was zu Kostenvorteilen führt. Zudem ist ein Vorgang des Verbindens der Karosserieelemente einfacher zu bewerkstelligen, da ein Befüllen von geschlossenen Räumen mit Klebstoff Schwierigkeiten mit sich bringt, welche hierdurch vermieden werden können, insbesondere das Verdrängen der Luft im geschlossenen Hohlraum durch den Klebstoff.

Ein Kerngedanke der vorliegenden Erfindung besteht darin, dass durch den Einsatz eines geeigneten Klebstoffes ein offenes System zur Verbindung von Karosserieelementen in Kraftfahrzeugen verwendet werden kann. Es wurde nämlich beobachtet, dass mit einem geeigneten Klebstoff ein sich selbst abdichtendes System geschaffen werden kann, vorausgesetzt, es werden diesbezüglich geeignet dimensionierte Kanäle mit angrenzenden Schultern vorgesehen.

Dabei ist der Klebstoff so ausgebildet, dass er bei einer Abkühlung einen scharfen Übergang zwischen einem nicht verfestigten und einem verfestigten Zustand aufweist. Dies erlaubt es, Komponenten eines hier beschriebenen offenen Systems mit einem solchen geeigneten Klebstoff zu verkleben.

Dabei werden die Kanäle so dimensioniert, dass der durch die Kanäle fliessende Klebstoff vergleichsweise langsam abkühlt. Dies wird insbesondere dadurch erreicht, indem eine Oberfläche der Kanäle vergleichsweise klein ausgestaltet ist im Vergleich zu einem Volumen der Kanäle.

Demgegenüber kühlt der Klebstoff im Bereich zwischen der Schulter und dem zweiten Karosserieelement vergleichsweise schneller ab. Dies wird insbesondere dadurch erreicht, indem in diesem Bereich eine Oberfläche vergleichsweise grösser ausgestaltet ist im Vergleich zu einem Volumen dieses Bereiches.

Eine derartige Dimensionierung des offenen Systems hat nun zur Folge, dass der in erwärmtem Zustand eingebrachte Klebstoff auf den Schultern schneller abkühlt als im Kanal. Dies führt zu einer schnelleren Verfestigung des Klebstoffes auf den Schultern als in den Kanälen und damit zu einem zuverlässigen sich selbst verschliessenden System.

Durch ein geeignetes Vorsehen von solchen Kanälen kann nun der in die Kanäle eingebrachte Klebstoff im Zwischenraum zwischen erstem und zweitem Karosserieelement verteilt werden, und durch das geeignete Vorsehen von Schulterbereichen neben den Kanälen wird ein sich selbst verschliessendes System geschaffen.

Die Bezeichnung "offen" bzw. "offener Hohlraum" bedeutet im Zusammenhang dieser Erfindung "flüssigkeitsdurchlässig" oder "nicht abgedichtet".

In einer beispielhaften Ausführungsform ist das Aufsatzelement einstückig ausgebildet.

In einer alternativen Ausführungsform umfasst das Aufsatzelement mehrere separate Bestandteile.

In einer beispielhaften Weiterbildung umfasst das Aufsatzelement einen ringförmigen Bestandteil und einen stopfenförmige Bestandteil, oder das Aufsatzelement umfasst zwei ringförmige Bestandteile, oder das Aufsatzelement umfasst zwei stopfenförmige Bestandteile.

In einer beispielhaften Ausführungsform ist das Aufsatzelement aus Kunststoff, insbesondere aus PA, gebildet.

In einer beispielhaften Ausführungsform ist das Aufsatzelement ein vorgefertigter, insbesondere spritzgegossener, Kunststoff.

In einer alternativen Ausführungsform ist das Aufsatzelement ein direkt auf dem zumindest einen Karosserieelement geformter, insbesondere extrudierter, Kunststoff.

In einer beispielhaften Ausführungsform umfasst das Aufsatzelement zudem ein expandierbares Material zur Abdichtung eines Querschnittes.

Dies hat den Vorteil, dass dadurch das Aufsatzelement sowohl zur Bildung eines Kanals als auch zur Abdichtung eines Querschnittes (als sogenannter Baffle) verwendet werden kann.

In einer beispielhaften Ausführungsform ist das erste Karosserieelement ein Profil, ein Gussteil oder ein blechförmiges Element, und das zweite Karosserieelement ist ein Profil, ein Gussteil oder ein blechförmiges Element.

Karosserien von Kraftfahrzeugen werden üblicherweise aus solchen Elementen aufgebaut. Dabei kann es zu verschiedenen Kombinationen solcher Elemente kommen, welche miteinander verbunden werden sollen. Ein Hauptvorteil der vorliegenden Erfindung ist es nun, dass das hier vorgeschlagene System zur Verbindung von Karosserieelementen universell für verschiedenste Elemente angewendet werden kann, unabhängig von deren Formgebung, Material oder Herstellungsweise. Somit kann dieses System vielfältig im Karosseriebau von Kraftfahrzeugen angewendet werden.

Die Bezeichnung "blechförmiges Element" umfasst im Zusammenhang dieser Erfindung ausdrücklich sowohl Elemente aus Metall als auch Elemente aus Kunststoff oder faserverstärktem Kunststoff. Diese Bezeichnung bezieht sich daher lediglich auf die Form und nicht auf das Material des Elementes.

Die Bezeichnung "Profil" umfasst im Zusammenhang dieser Erfindung ausdrücklich Elemente, welche auf unterschiedliche Art hergestellt werden. Beispielsweise sind damit Extrusionsprofile, Innenhochdruckumformungsprofile, oder gerollte blechförmige Elemente umfasst.

Die Bezeichnung "Gussteil" umfasst im Zusammenhang dieser Erfindung ausdrücklich Elemente, welche auf unterschiedliche Art hergestellt werden. Beispielsweise sind damit durch Formguss, Blockguss, oder Strangguss hergestellte Elemente umfasst.

In einer beispielhaften Ausführungsform besteht das erste Karosserieelement und/oder das zweite Karosserieelement zumindest teilweise aus Metall, Kunststoff oder faserverstärktem Kunststoff.

In einer bevorzugten Weiterbildung besteht das erste und/oder das zweite Karosserieelement zumindest teilweise aus Polyamid, insbesondere aus PA 6.6 (Nylon).

In einer bevorzugten Weiterbildung besteht das erste und/oder das zweite Karosserieelement zumindest teilweise aus Stahl, Aluminium oder Magnesium oder aus Kombinationen von diesen Metallen.

In einer alternativen bevorzugten Weiterbildung besteht das erste Karosserieelement und/oder das zweite Karosserieelement zumindest teilweise aus faserverstärkten Kunststoffen der Gruppe CFRP, GFRP oder SMC.

Ein Vorteil des hier vorgeschlagenen Systems ist insbesondere, dass verschiedene Materialien und Materialkombinationen miteinander verbunden werden können.

In einer beispielhaften Ausführungsform beträgt ein Abstand zwischen Schulter und gegenüberliegendem Karosserieelement zwischen 0,2 und 5 mm, bevorzugt zwischen 0,5 und 4 mm, besonders bevorzugt zwischen 1 und 3 mm.

Ein derart dimensionierter Abstand zwischen Schulter und gegenüberliegendem Karosserieelement stellt sicher, dass der Klebstoff in diesem Bereich des offenen Hohlraums schneller abkühlt und dadurch verfestigt als im Bereich der Kanäle, so dass der Klebstoff durch die Kanäle verteilt wird, sich jedoch in den Bereichen der Schultern abkühlt und verfestigt und dadurch den Hohlraum abdichtet.

Je nach Zusammensetzung und Applikationsparameter (z.B. Temperatur oder Extrusionsrate) des Klebstoffes kann der Abstand zwischen Schulter und gegenüberliegendem Karosserieelement anders gewählt werden, um eine gewünschte Abdichtungswirkung des Klebstoffes in diesem Bereich zu erzielen. Ebenso kann dieser Abstand zwischen Schulter und gegenüberliegendem Karosserieelement dazu benutzt werden, eine Verklebungsfläche zwischen erstem Karosserieelement und zweitem Karosserieelement zu beeinflussen, wobei ein grösserer Abstand zu einer grösseren Verklebungsfläche und ein kleinerer Abstand zu einer kleineren Verklebungsfläche führen wird. Je nachdem, ob eine möglichst starke mechanische Verbindung zwischen den Karosserieelementen oder ob ein möglichst sparsamer Einsatz des Klebstoffes höher gewichtet wird, kann hier eine geeignete Lösung ausgewählt werden.

In einer beispielhaften Ausführungsform sind die Abstände zwischen Schulter und gegenüberliegendem Karosserieelement bei beiden Schultern beidseitig des Kanals gleich gross.

In einer alternativen Ausführungsform sind diese Abstände unterschiedlich gross, wobei sich beide Abstände in einem Rahmen bewegen, welcher gemäss obiger Beschreibung ein Stoppen des Klebstoffes auf den Schultern ermöglicht.

In einer beispielhaften Ausführungsform beträgt eine Kanalbreite zwischen 5 und 300 mm, bevorzugt zwischen 10 und 70 mm, besonders bevorzugt zwischen 10 und 30 mm.

Natürlich muss der Kanal nicht linear über dessen gesamte Länge verlaufen, sondern kann auch gebogen oder mit diversen Richtungsänderungen ausgeführt werden.

Allgemein dient der Kanal der groben Verteilung des Klebstoffes im zur Verklebung vorgesehenen In einer beispielhaften Ausführungsform beträgt eine Kanaltiefe zwischen 0.5 und 10 mm, bevorzugt zwischen 1 und 8 mm, besonders bevorzugt zwischen 2 und 5 mm.

In einer beispielhaften Ausführungsform beträgt eine Kanallänge zwischen 50 und 500 mm, bevorzugt zwischen 70 und 400 mm, besonders bevorzugt zwischen 100 und 300 mm.

Eine solche Dimensionierung des Kanals hat den Vorteil, dass dadurch der Klebstoff so langsam abgekühlt wird beim Durchfliessen des Kanals, dass der Klebstoff über eine im Wesentlichen gesamte Länge des Kanals verteilt wird, um dadurch das erste Karosserieelement und das zweite Karosserieelement zuverlässig miteinander zu verkleben.

Der Kanal kann einen konstanten Querschnitt aufweisen, in einem alternativen Ausführungsbeispiel kann der Kanal jedoch auch einen nicht-konstanten Querschnitt aufweisen. Dabei kann sowohl die Länge, die Breite, als auch die Tiefe des Kanals nichtkonstant ausgebildet sein. Somit sind beispielsweise auch Kanäle realisierbar, welche an Enden weniger tief sind als in einer Mitte des Kanals (beispielsweise unter einer Einfüllöffnung), oder Kanäle, welche in Draufsicht eine ovale Formgebung aufweisen. Zwischenbereich zwischen erstem und zweitem Karosserieelement. Somit kann je nach Anforderung der jeweiligen Anwendung eine andere Kanalgeometrie vorteilhaft sein.

Je nach Zusammensetzung und Applikationsparameter des Klebstoffes kann die Dimensionierung des Kanals in den genannten Bereichen angepasst werden, um ein optimales Resultat zu erzielen. Wünschenswert ist dabei, dass der Klebstoff erst dann im Kanal vollständig abkühlt bzw. verfestigt, wenn die gewünschte Verteilung des Klebstoffes im Zwischenraum zwischen dem ersten Karosserieelement und dem zweiten Karosserieelement erreicht worden ist.

In einer beispielhaften Ausführungsform hat der Kanal eine V-förmige oder eine U-förmige oder eine eckige oder eine halbrunde Form bzw. Querschnitt.

Je nachdem, wie schnell der Klebstoff durch den Kanal fliessen soll bzw. wie schnell der Klebstoff im Kanal abkühlen und somit verfestigen soll, kann eine geeignete Querschnittsform des Kanals ausgewählt werden. Grundsätzlich gilt, dass der Klebstoff schneller abkühlt, je grösser die Kontaktoberfläche ausfällt. Somit wird der Klebstoff in einer halbrunden Form langsamer auskühlen als in einer viereckigen Querschnittsform.

In einer beispielhaften Ausführungsform verläuft der Kanal quer oder im Wesentlichen quer zu einer Längsrichtung des ersten Karosserieelementes.

In einer alternativen Ausführungsform verläuft der Kanal längs oder im Wesentlichen längs zu einer Längsrichtung des ersten Karosserieelementes.

In einer weiteren beispielhaften Ausführungsform umrundet der Kanal das erste Karosserieelement vollständig und ist so in sich geschlossen.

In einer weiteren beispielhaften Ausführungsform weist der Kanal Verzweigungen auf.

In einer weiteren beispielhaften Ausführungsform weist der Kanal einen Hauptkanal und damit verbundene Seitenkanäle auf. Die Anordnung und Ausgestaltung des Kanals bzw. der Kanäle ist davon abhängig, an welchen Stellen das erste Karosserieelement mit dem zweiten Karosserieelement verklebt werden soll. Zu diesem Zweck können Kanäle, welche das Verstärkungselement vollständig umrunden, vorgesehen werden, es können mehrere separat voneinander ausgestaltete Kanäle vorgesehen werden, oder aber es können Kanäle mit Verzweigungen bzw. Seitenkanälen vorgesehen werden. Insbesondere können Seitenkanäle dazu verwendet werden, die Klebefläche zwischen erstem Karosserieelement und zweitem Karosserieelement zu vergrössern.

In einer beispielhaften Ausführungsform beträgt eine Breite der Schulter, gemessen in derselben Richtung wie die Kanalbreite, weniger als 30 mm, bevorzugt weniger als 20 mm, besonders bevorzugt weniger als 10 mm, besonders bevorzugt weniger als 5 mm.

Das Vorsehen einer derart dimensionierten Schulter hat den Vorteil, dass dadurch eine Verklebung des ersten Karosserieelementes mit dem zweiten Karosserieelement realisierbar ist, welche eine geringe Menge an Klebstoff erfordert.

Je nach Anforderung und Ausgangslage kann demnach eine geeignete Breite der Schulter gewählt werden. Um das Stoppen der Ausbreitung des Klebstoffes auf der Schulter sicherzustellen, kann beispielsweise das Verfestigungsverhalten des Klebstoffes durch eine entsprechende Anpassung der Klebstoffzusammensetzung, oder durch eine veränderte Klebstofftemperatur oder Injektionsgeschwindigkeit bei der Einbringung des Klebstoffes in den Kanal, oder durch eine Anpassung des Abstands zwischen Schulter und Strukturelement beeinflusst werden.

In einer beispielhaften Ausführungsform beträgt eine Breite eines Anschlussbereiches, gemessen in derselben Richtung wie die Kanalbreite, mehr als 1 mm, bevorzugt mehr als 20 mm, besonders bevorzugt mehr als 30 mm, besonders bevorzugt mehr als 40 mm.

In einer beispielhaften Ausführungsform liegen die Schulter und der Anschlussbereich in derselben Ebene.

In einer alternativen Ausführungsform liegen die Schulter und der Anschlussbereich nicht in derselben Ebene.

Da der Anschlussbereich nicht mit Klebstoff bedeckt wird, ist es für die Verklebung unerheblich, wie dieser Anschlussbereich ausgestaltet ist. Wesentlich ist lediglich, dass ein Raum zwischen Schulter und gegenüberliegendem Karosserieelement und ein Raum zwischen Anschlussbereich und gegenüberliegendem Karosserieelement gegeneinander offen sind.

In einer bevorzugten Ausführungsform hat das erste oder das zweite Karosserieelement eine Einfüllöffnung zur Einbringung des Klebstoffes in den Kanal.

Der Vorteil einer solchen Einfüllöffnung ist es, dass der Klebstoff direkt in den Kanal eingebracht werden kann.

In einer bevorzugten Weiterbildung mündet die Einfüllöffnung direkt in den Kanal. Dabei kann die Einfüllöffnung mittig in Bezug auf eine Länge und/oder Breite des Kanales angeordnet sein.

In einer beispielhaften Ausführungsform sind das erste Karosserieelement und das zweite Karosserieelement zur Vorfixierung des ersten und des zweiten Karosserieelementes zumindest teilweise miteinander verbunden, bevor der Klebstoff eingebracht wird. In einer bevorzugten Ausführungsform werden die Karosserieelemente durch eine einseitige oder zweiseitige mechanische Fügetechnik, insbesondere durch Nieten, Schweissen, Clips (z.B. Schnappverschluss-Clips), Schrauben oder Bolzen vorfixiert.

In einer beispielhaften Ausführungsform ist das erste Karosserieelement und das zweite Karosserieelement ein Profil. Beispielsweise weisen diese Profile unterschiedlich grosse Querschnitte auf, so dass das kleinere Profil in das grössere Profil einschiebbar ist.

In einem weiteren Ausführungsbeispiel sind das erste und das zweite Karosserieelement aus je einem Profil und einem blechförmigen Element ausgebildet.

In einer weiteren beispielhaften Ausführungsform sind das erste und das zweite Karosserieelement je ein Gussteil und ein Profil. Dabei kann beispielsweise das Gussteil eine Öffnung aufweisen, in welche das Profil einschiebbar ist.

In einer weiteren beispielhaften Ausführungsform sind das erste und das zweite Karosserieelement je ein Gussteil. Beispielsweise kann dabei eines der Gussteile eine Öffnung aufweisen, in welches ein Teil des zweiten Gussteils einschiebbar ist.

In einer weiteren beispielhaften Ausführungsform sind das erste und das zweite Karosserieelement blechförmige Elemente.

In einem weiteren Ausführungsbeispiel sind das erste und das zweite Karosserieelement je ein blechförmiges Element und ein Gussteil. Beispielsweise können zwei blechförmige Elemente, welche einen U-förmigen Querschnitt aufweisen, zu einem Hohlraum verschweisst oder verklebt werden. Das Gussteil kann beispielsweise in diesem Hohlraum angeordnet werden.

Es versteht sich von selbst, dass auch mehr als zwei Karosserieelemente miteinander verklebt werden können.

Ein wesentlicher Vorteil des hier vorgeschlagenen Systems ist es, dass unterschiedlichst geformte Karosserieelemente miteinander verbunden werden können, weil Aufsatzelemente zur Bildung von Kanälen und Schultern an jedem beliebigen Element vorgesehen werden können. Dies erlaubt einen vielfältigen Einsatz des hier vorgeschlagenen Systems verbundener Karosserieelemente für Kraftfahrzeuge.

Die eingangs gestellte Aufgabe wird weiterhin gelöst durch ein Verfahren zur Verbindung von Karosserieelementen in einem Kraftfahrzeug. Das Verfahren umfasst die Schritte: Bereitstellen eines ersten Karosserieelementes; Bereitstellen eines zweiten Karosserieelementes; Anordnen eines Aufsatzelementes an zumindest einem der Karosserieelemente; Anordnen des ersten Karosserieelementes und des zweiten Karosserieelementes derart, dass zwischen den Karosserieelementen ein Spalt gebildet wird, und dass durch das Aufsatzelement dieser Spalt zumindest in einen Kanal und eine neben dem Kanal liegende Schulter gliedert wird; Einbringen eines Klebstoffes in den Kanal; und Ausbreiten des Klebstoffes zumindest teilweise im Kanal und zumindest teilweise auf der Schulter zur Verklebung des ersten Karosserieelementes mit dem zweiten Karosserieelement, wobei die Ausbreitung des Klebstoffes auf der Schulter gestoppt wird.

Das hier vorgeschlagene Verfahren bietet wiederum dieselben Vorteile, welche bereits zum hier vorgeschlagenen System verbundener Karosserieelemente genannt wurden. Insbesondere kann dadurch das Verfahren zur Verklebung von Karosserieelementen kostengünstiger und einfacher in der Handhabung ausgestaltet werden.

In einer beispielhaften Ausführungsform wird die Ausbreitung des Klebstoffes auf der Schulter durch eine zumindest teilweise Verfestigung des Klebstoffes auf der Schulter gestoppt.

In einer beispielhaften Ausführungsform wird beim Anordnen des Aufsatzelementes das Aufsatzelement an das zumindest eine Karosserieelement gesteckt.

In einer alternativen Ausführungsform wird beim Anordnen des Aufsatzelementes das Aufsatzelement auf das zumindest eine Karosserieelement aufextrudiert.

In einer beispielhaften Ausführungsform umfasst das Verfahren den weiteren Schritt: Härten des Klebstoffes durch eine Anwendung einer Temperatur von zumindest 120°C, bevorzugt von zumindest 140°C, besonders bevorzugt von zumindest 160°C.

Beispielsweise kann die Härtung des Klebstoffes in einem Ofen stattfinden, wie er üblicherweise nach der kathodischen Tauchlackierung (KTL) der Karosserie zur Anwendung kommt. In solchen Öfen herrschen üblicherweise Temperaturen zwischen 120°C und 220°C. Solche Temperaturen eignen sich insbesondere für das Aushärten von Klebstoffen, welche im Zusammenhang mit dieser Erfindung verwendet werden können. Da die Karosserie mit den verbundenen Karosserieelementen und dem verfestigten Klebstoff sowieso durch den Prozess der Tauchlackierung und anschliessender Hitzeanwendung zur Aushärtung der Lackierung geht, ist eine Nutzung dieser Hitzeanwendung im Ofen nach der Tauchlackierung zur Aushärtung des Klebstoffes besonders vorteilhaft.

In einer beispielhaften Ausführungsform wird der Klebstoff beim Einbringen in den Kanal durch eine Pumpe aus einem Klebstofftank gefördert.

In einer beispielhaften Ausführungsform wird der Klebstoff beim Einbringen in den Kanal durch eine Einfüllöffnung im ersten oder im zweiten Karosserieelement gefördert.

Das Vorsehen von einer Einfüllöffnung im ersten oder im zweiten Karosserieelement hat den Vorteil, dass dadurch der Klebstoff auf einfache Art und Weise, beispielsweise mit Robotern, in den Kanal eingebracht werden kann.

### Klebstoff

Die nachfolgend beschriebene Klebstoffzusammensetzung ist ein beispielhafter Klebstoff, wie er im Zusammenhang dieser Erfindung verwendet werden kann.

Es wurde eine hitzehärtende einkomponentige Epoxidzusammensetzung gemäss Tabelle 1 hergestellt.

**Tabelle 1, Eingesetzte Rohstoffe.**

| **Rohstoffe** | **Gewichts-teile** |
|---|---|
| Epoxy-Flüssigharz, D.E.R. 331 (Bisphenol-A-diglycidylether), Dow | 50 |
| Polyesterpolyol, Dynacol 7380, Degussa AG, Deutschland | 5 |
| Reaktivverdünner, Hexandiolglycidylether, Denacol EX-212, Nagase America | 1 |
| Zähigkeitsverbesserer ***D-1*** | 34 |
| Härter, Dicyandiamid | 4.78 |
| Beschleuniger, substituierter Harnstoff | 0.22 |
| Pyrogene Kieselsäure | 5 |

### Herstellung eines Zähigkeitsverbesserers ("D-1")

150 g Poly-THF 2000 (OH-Zahl 57 mg/g KOH) und 150 Liquiflex H (OH-Zahl 46 mg/g KOH) wurden 30 Minuten unter Vakuum bei 105°C getrocknet. Nachdem die Temperatur auf 90°C reduziert worden war, wurden 61.5 g IPDI und 0.14 g Dibutylzinndilaurat zugegeben. Die Reaktion wurde unter Vakuum bei 90°C bis zur Konstanz des NCO-Gehaltes bei 3.10% nach 2.0 h geführt (berechneter NCO-Gehalt: 3.15%). Anschliessend wurden 96.1 g Cardanol als Blockierungsmittel zugegeben. Es wurde bei 105°C unter Vakuum weitergerührt bis kein freies NCO mehr nachgewiesen werden konnte. Das Produkt wurde so als Zähigkeitsverbesserer D-1 verwendet. Folgende Rohstoffe wurden dazu eingesetzt:

| |
|---|
| Poly-THF 2000 (Difunktionelles Polybutylenglykol) (OH-Equivalentgewicht = ca. 1000 g/OH-Equivalent), BASF |
| Liquiflex H (Hydroxylterminertes Polybutadien) (OH-Equivalentgewicht = ca. 1230 g/OH-Equivalent), Krahn |
| Isophoron-diisocyanat (= "IPDI"), Evonik |
| Cardolite NC-700 (Cardanol, meta-substituiertes Alkenyl-mono-Phenol), Cardolite |

### Herstellung Masterbatch

Das Polyesterpolyol wurde etwa 40°C über seinem Erweichungspunkt von 77 °C (ca. 100-140°C) während ca. 30 Minuten mit Epoxy-Flüssigharz vermischt bis eine klare Mischung (ca. 33 Gew.-% Polyesterpolyol bezogen auf das Gesamtgewicht des Masterbatch) entstand. Der Masterbatch wurde anschliessend auf ca. 100°C heruntergekühlt.

### Herstellung der hitzehärtenden einkomponentigen Epoxidzusammensetzung:

Die übrigen Komponenten der Epoxidzusammensetzung wurden zu einer homogenen Masse vermischt, bevorzugt bei Temperaturen von ca. 50-90°C. Sobald die Mischung homogen war wurde der Masterbatch in flüssiger Form (Temperatur Masterbatch 100°C) zugegeben und sofort vermischt.

Die Injektion der hitzehärtenden einkomponentigen Epoxidzusammensetzung erfolgte bei einer Temperatur von 60°C und bei einer Injektionsgeschwindigkeit von 50 ml/min.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie eines Kraftfahrzeuges;
- Fig. 2: eine schematische Darstellung eines beispielhaften Systems verbundener Karosserieelemente im Querschnitt;
- Fig. 3: eine schematische Darstellung eines beispielhaften Systems verbundener Karosserieelemente im Querschnitt;
- Fig. 4a bis 4c: eine schematische Darstellung einer beispielhaften Kombination eines ersten und eines zweiten Karosserieelementes mit dazwischen angeordnetem Aufsatzelement;
- Fig. 5a und 5b: eine schematische Darstellung eines beispielhaften Systems verbundener Karosserieelemente im Querschnitt;
- Fig. 6a bis 6c: eine schematische Darstellung eines beispielhaften Einbringens eines Klebstoffes in einen Zwischenraum zwischen einem ersten und einem zweiten Karosserieelement; und
- Fig. 7: eine schematische Darstellung einer Einbringungseinrichtung.

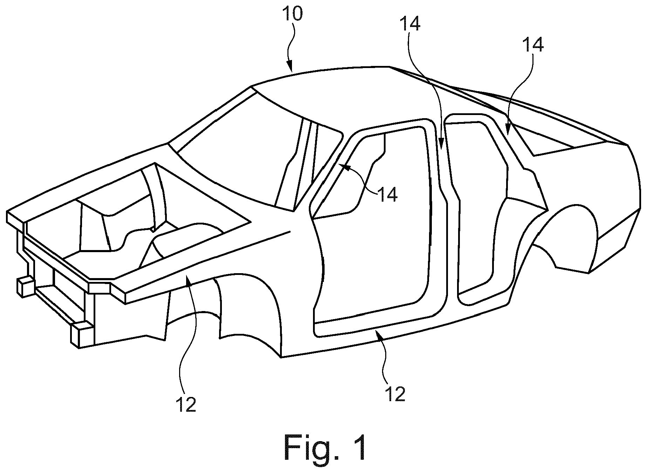

In Fig. 1 ist eine Karosserie 10 eines Kraftfahrzeugs schematisch dargestellt. Die Karosserie 10 weist dabei verschiedene Strukturen auf, wie beispielsweise Säulen 14 und Verstrebungen 12. Solche und andere Strukturen der Karosserie 10 müssen auf geeignete Art und Weise miteinander verbunden werden. Dabei können insbesondere Profile, Gussteile und blechförmige Elemente miteinander verbunden werden.

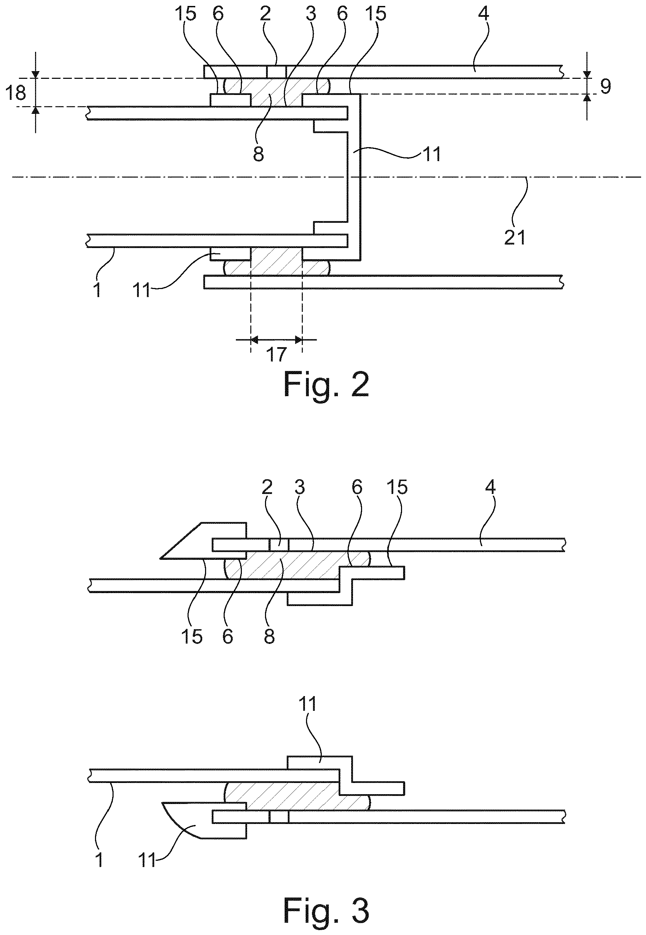

In Fig. 2 ist schematisch ein Querschnitt eines Systems 1 verbundener Karosserieelemente 1, 4 dargestellt. In einem Spalt zwischen den beiden Karosserieelementen 1, 4 ist dabei ein Aufsatzelement 11 angeordnet, welches diesen Spalt in einen Kanal 3 und eine neben dem Kanal 3 liegende Schulter 6 gliedert. Neben der Schulter 6 ist jeweils ein Anschlussbereich 15 angeordnet. Dabei ist zur Verbindung der Karosserieelemente 1, 4 Klebstoff 8 im Kanal 3 und auf den Schultern 6 ausgebreitet, welcher durch eine Öffnung 2 in den Kanal 3 eingefüllt werden kann.

In diesem Ausführungsbeispiel ist das Aufsatzelement 11 auf dem ersten Karosserieelement 1 aufgesteckt bzw. aufgeschoben. Weiterhin besteht das Aufsatzelement 11 in diesem Ausführungsbeispiel aus einem ringförmigen Bestandteil und einem stopfenförmigen Bestandteil.

Ein Abstand 9 zwischen Schulter 6 und zweitem Karosserieelement 4 ist dabei so gewählt, dass der Klebstoff 8 auf der Schulter 6 zum Stoppen kommt, ohne dabei auf den Anschlussbereich 15 neben der Schulter 6 zu fliessen. Der Kanal 3 hat eine Kanalbreite 17 und eine Kanaltiefe 18, welche so gewählt sind, dass der Klebstoff 8 eine vorgesehene Strecke durch den Kanal 3 fliessen kann, ohne dass der Klebstoff 8 dabei zum Stoppen kommt.

In Fig. 3 ist wiederum schematisch ein Querschnitt eines Systems 1 verbundener Karosserieelemente 1, 4 dargestellt. Im Unterschied zum System 1 in Fig. 2 ist hier das Aufsatzelement 11 sowohl auf dem ersten Karosserieelement 1 als auch auf dem zweiten Karosserieelement 4 angeordnet. Zwischen den beiden Bestandteilen des Aufsatzelementes 11 wird dadurch der Kanal 3 und die daneben liegenden Schultern 6 gebildet.

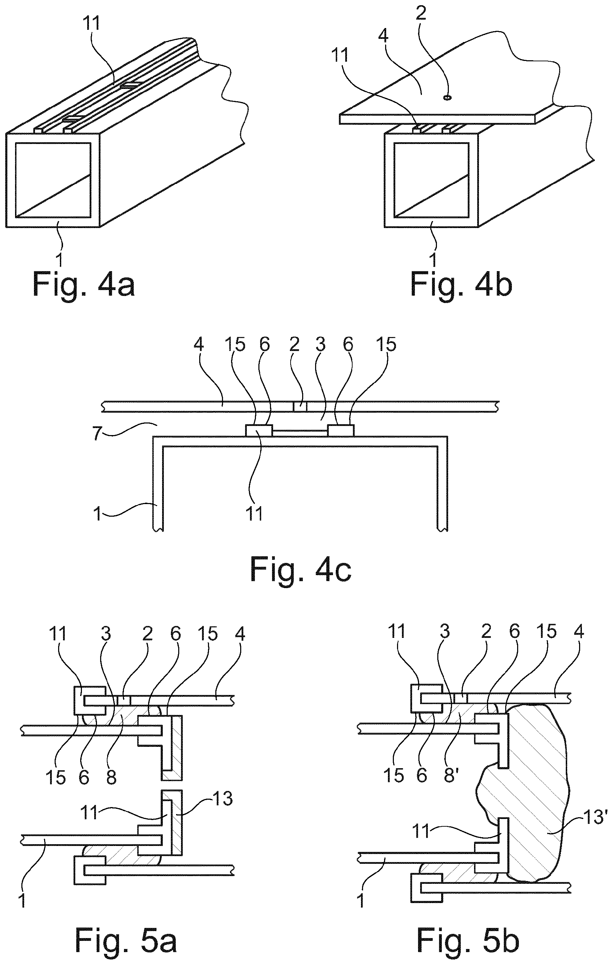

In den Fig. 4a bis 4c ist eine schematische Darstellung einer beispielhaften Kombination eines ersten Karosserieelementes 1 und eines zweiten Karosserieelementes 4 mit dazwischen angeordnetem Aufsatzelement 11 gezeigt. In diesem Ausführungsbeispiel ist das Aufsatzelement 11 auf dem ersten Karosserieelement 1 aufextrudiert. Dabei beinhaltet das Aufsatzelement 11 zwei parallel verlaufende Rippen, welche in gewissen Abständen mit quer verlaufenden Stegen miteinander verbunden sind. Diese Rippen bilden sowohl den Kanal 3 als auch die Schultern 6 und die Anschlusssbereiche 15 (Fig. 4c).

In den Fig. 5a und 5b ist schematisch ein Querschnitt eines Systems 1 verbundener Karosserieelemente 1, 4 dargestellt. In diesem Ausführungsbeispiel hat das Aufsatzelement 11 weiterhin ein expandierbares Material 13. Dabei ist das Aufsatzelement 11 mit dem expandierbaren Material 13 derart ausgestaltet, dass der Querschnitt des ersten Karosserieelementes 1 dadurch nicht vollständig verschlossen wird. Dies erlaubt es, dass insbesondere eine Tauchlack-Flüssigkeit durch die Karosserieelemente zirkulieren kann (Fig. 5a).

Nach dem Tauchlakieren werden die Karosserien typischerweise in einem Ofen gebrannt. Durch die dabei angewendete Hitze wird das expandierbare Material 13 geschäumt. Das expandierte Material 13' verschliesst nun den Querschnitt der Profile, sodass beispielsweise eine akustische Dämmung oder eine Dämmung gegen Flüssigkeiten erreicht werden kann (Fig. 5b).

Zudem wird durch die Hitze der Klebstoff 8 typischerweise ausgehärtet, sodass nach dem Einbrennen der Karosserie im Ofen ein ausgehärteter Klebstoff 8' vorliegt (Fig. 5b)

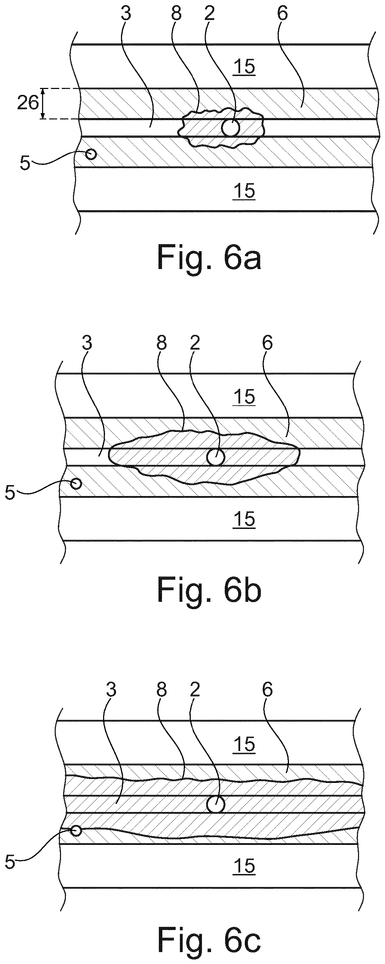

In den Fig. 6a bis 6c ist ein beispielhafter Vorgang einer Einbringung des Klebstoffes 8 in einem Zwischenraum zwischen erstem Karosserieelement und zweitem Karosserieelement dargestellt. Dabei zeigt Fig. 6a eine Situation kurz nach einem Beginn des Einbringens des Klebstoffes 8. Fig. 6b zeigt eine Situation, in welcher sich der bereits eingebrachte Klebstoff 8 vorwiegend entlang des Kanals 3 ausbreitet, und in welcher gleichzeitig fortwährend neuer Klebstoff 8 eingebracht wird. Fig. 6c zeigt schliesslich eine Situation, in welcher der Klebstoff 8 fertig in den Zwischenraum eingebracht ist und das erste Karosserieelement in vorgesehener Art und Weise mit dem zweiten Karosserieelement verklebt ist.

Der Klebstoff 8 wird durch eine Einfüllöffnung 2 in den Kanal 3 eingebracht. Der flüssige Klebstoff 8 verbreitet sich vorwiegend in Richtung des Kanals 3 und fliesst zumindest teilweise auf die Schulter 6 des ersten Karosserieelementes. Dadurch, dass der Abstand zwischen Schulter 6 und dem gegenüberliegenden Karosserieelement geringer ist als der Abstand zwischen einem Boden des Kanals 3 und dem gegenüberliegenden Karosserieelement, kühlt der Klebstoff 8 im Bereich der Schulter schneller aus als im Bereich des Kanals 3 und verfestigt sich als Folge dieser Abkühlung. Dies führt zu einer sich selbst abdichtenden Funktion des Klebestoffes 8 im Bereich der Schulter 6. Das System ist dabei derart konfiguriert, dass der Klebstoff 8 nicht über den Bereich der Schulter 6 fliesst, so dass der Anschlussbereich 15 frei von Klebstoff 8 bleibt.

Zudem ist in diesem Ausführungsbeispiel eine Prüföffnung 5 vorgesehen, welche erlaubt, einen Fortschritt der Ausbreitung des Klebstoffes 8 im Zwischenbereich zwischen erstem Karosserieelement und zweitem Karosserieelement zu überprüfen.

In den Fig. 6a und 6b hat sich der Klebstoff 8 noch nicht bis zur Prüföffnung 5 ausgebreitet. Fig. 6c zeigt hingegen eine Situation, in welcher der Klebstoff 8 in vorgesehener Art und Weise den Zwischenraum zwischen erstem Karosserieelement und zweitem Karosserieelement ausfüllt und dabei die Prüföffnung 5 erreicht.

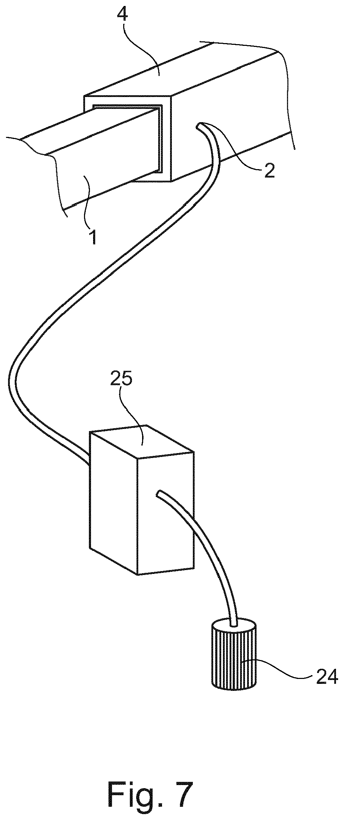

In Fig. 7 ist eine Einrichtung zur Einbringung des Klebstoffes in den Zwischenbereich zwischen dem ersten und dem zweiten Karosserieelement (nicht ersichtlich auf dieser Darstellung) dargestellt. Dabei fördert eine Pumpe 25 Klebstoff aus einem Klebstofftank 24 durch eine Einfüllöffnung 2 im ersten Karosserieelement in den Zwischenraum zwischen erstem und zweitem Karosserieelement. In diesem Ausführungsbeispiel ist das Aufsatzelement zur Bildung des Kanals nicht ersichtlich, weil es vollständig vom zweiten Karosserieelement 4 abgedeckt ist.

### Bezugszeichenliste

- 1: erstes Karosserieelement
- 2: Einfüllöffnung
- 3: Kanal
- 4: zweites Karosserieelement
- 5: Prüföffnung
- 6: Schulter
- 7: Spalt
- 8: Klebstoff
- 8': gehärteter Klebstoff
- 9: Abstand zwischen Schulter und zweitem Karosserieelement
- 10: Karosserie
- 11: Aufsatzelement
- 12: Verstrebung
- 13: expandierbares Material
- 13': expandiertes Material
- 14: Säule
- 15: Anschlussbereich
- 17: Kanalbreite
- 18: Kanaltiefe
- 21: Längsachse
- 24: Klebstofftank
- 25: Pumpe
- 26: Schulterbreite

## Patentansprüche

1. System verbundener Karosserieelemente (1, 4) für ein Kraftfahrzeug, das System umfassend:
ein erstes Karosserieelement (1);
ein zweites Karosserieelement (4), wobei die Karosserieelemente (1, 4) derart zueinander angeordnet sind, dass zwischen den Karosserieelementen (1, 4) ein Spalt (7) ist;
einen Klebstoff (8), welcher zumindest teilweise im Spalt (7) angeordnet ist und das erste Karosserieelement (1) mit dem zweiten Karosserieelement (4) verklebt
**dadurch gekennzeichnet, dass**
zumindest ein Aufsatzelement (11) an zumindest einem der Karosserieelemente (1, 4) angeordnet ist, sodass das Aufsatzelement (11) den Spalt (7) in einen Kanal (3) und eine neben dem Kanal (3) liegende Schulter (6) gliedert, wobei der Klebstoff (8) zumindest teilweise im Kanal (3) und zumindest teilweise auf der Schulter (6) angeordnet ist, und wobei ein direkt an die Schulter (6) anschliessender Anschlussbereich (15) frei ist von Klebstoff (8), und wobei das Aufsatzelement (11) den Spalt (7) zwischen den Karosserieelementen (1, 4) nicht vollständig abdichtet.

2. System nach Anspruch 1, wobei das Aufsatzelement (11) aus Kunststoff, insbesondere aus PA, gebildet ist.

3. System nach Anspruch 1 oder 2, wobei das Aufsatzelement (11) ein vorgefertigter, insbesondere spritzgegossener, Kunststoff ist oder wobei das Aufsatzelement (11) ein direkt auf dem zumindest eine Karosserieelement (1, 4) geformter, insbesondere extrudierter, Kunststoff ist.

4. System nach Anspruch 1, wobei das erste Karosserieelement (1) ein Profil, ein Gussteil oder ein blechförmiges Element ist, und wobei das zweite Karosserieelement (4) ein Profil, ein Gussteil oder ein blechförmiges Element ist.

5. System nach einem der vorhergehenden Ansprüche, wobei das erste Karosserieelement (1) und/oder das zweite Karosserieelement (4) zumindest teilweise aus Metall, Kunststoff oder faserverstärktem Kunststoff bestehen.

6. System nach einem der vorhergehenden Ansprüche, wobei ein Abstand (9) zwischen Schulter (6) und gegenüberliegendem Karosserieelement (1, 4) zwischen 0,2 und 5 mm beträgt.

7. System nach einem der vorhergehenden Ansprüche, wobei das Aufsatzelement (11) zudem ein expandierbares Material (13) zur Abdichtung eines Querschnittes umfasst.

8. System nach einem der vorhergehenden Ansprüche, wobei der Kanal (3) das erste Karosserieelement (1) vollständig umrundet und so in sich geschlossen ist.

9. System nach einem der vorhergehenden Ansprüche, wobei eine Breite der Schulter (6), gemessen in derselben Richtung wie die Kanalbreite (17), weniger als 30 mm beträgt.

10. Verfahren zur Verbindung von Karosserieelementen (1, 4) eines Kraftfahrzeugs, das Verfahren umfassend die Schritte:
Bereitstellen eines ersten Karosserieelementes (1);
Bereitstellen eines zweiten Karosserieelementes (4);
Anordnen eines Aufsatzelementes (11) an zumindest einem der Karosserieelemente (1, 4);
Anordnen des ersten Karosserieelementes (1) und des zweiten Karosserieelementes (4) derart, dass zwischen den Karosserieelementen (1, 4) ein Spalt (7) gebildet wird, und dass durch das Aufsatzelement (11) dieser Spalt (7) zumindest in einen Kanal (3) und eine neben dem Kanal (3) liegende Schulter (6) gliedert wird;
Einbringen eines Klebstoffes (8) in den Kanal (3); und
Ausbreiten des Klebstoffes (8) zumindest teilweise im Kanal (3) und zumindest teilweise auf der Schulter (6) zur Verklebung des ersten Karosserieelementes (1) mit dem zweiten Karosserieelement (4), wobei die Ausbreitung des Klebstoffes (8) auf der Schulter (6) gestoppt wird.

11. Verfahren nach Anspruch 10, wobei die Ausbreitung des Klebstoffes (8) auf der Schulter (6) durch eine zumindest teilweise Verfestigung des Klebstoffes (8) auf der Schulter (6) gestoppt wird.

12. Verfahren nach einem der Ansprüche 10 oder 11, wobei beim Anordnen des Aufsatzelementes (11) das Aufsatzelement (11) an das zumindest eine Karosserieelement (1, 4) gesteckt wird, oder wobei das Aufsatzelement (11) auf das zumindest eine Karosserieelement (1, 4) aufextrudiert wird.

13. Verfahren nach einem der Ansprüche 10 bis 12, wobei der Klebstoff (8) beim Einbringen in den Kanal (3) durch eine Pumpe (25) aus einem Klebstofftank (24) gefördert wird und/oder
wobei der Klebstoff (8) beim Einbringen in den Kanal (3) durch eine Einfüllöffnung (2) im ersten Karosserieelement (1) oder im zweiten Karosserieelement (4) gefördert wird.

14. Verfahren nach einem der Ansprüche 10 bis 13, wobei das Verfahren den Schritt umfasst: Härten des Klebstoffes (8) durch eine Anwendung einer Temperatur von zumindest 120°C.

15. Verfahren nach einem der Ansprüche 10 bis 14, wobei das Verfahren mit Elementen des Systems nach einem der Ansprüche 1 bis 9 durchgeführt wird.
